# EUROPEAN PATENT SPECIFICATION

(11) **EP 3 431 277 B1**
(45) Date of publication and mention of the grant of the patent: **18.03.2020**
(21) Application number: 17852637.2
(22) Date of filing: 19.06.2017
(51) Int. Cl.: B31F 1/24, B31F 1/28, B65H 29/62, B65H 31/24, B65H 43/04

(54) **DEVICE AND METHOD FOR ELIMINATING A DEFECTIVE SHEET, AND DEVICE FOR PRODUCING CARDBOARD SHEET**
VORRICHTUNG UND VERFAHREN ZUR BESEITIGUNG EINES FEHLERHAFTEN BOGENS, UND VORRICHTUNG ZUR HERSTELLUNG VON KARTONBOGEN
DISPOSITIF ET PROCÉDÉ D'ÉLIMINATION D'UNE FEUILLE DÉFECTEUSE, ET DISPOSITIF DE PRODUCTION DE FEUILLE CARTONNÉE

(30) Priority: 23.09.2016 JP 2016185692
(43) Date of publication of application: 23.01.2019
(73) Proprietor: Mitsubishi Heavy Industries Machinery Systems, Ltd., Hyogo-ku Kobe-shi Hyogo 652-8585 (JP)
(72) Inventor: TAKEMOTO, Shuichi, Mihara-shi Hiroshima 729-0393 (JP); FUKUSHIGE, Naoyuki, Mihara-shi Hiroshima 729-0393 (JP)
(74) Representative: Hoffmann Eitle
(86) International application number: PCT/JP2017/022468
(87) International publication number: WO 2018/055856

(56) References cited:
- JP-A- H1 029 254
- JP-A- H06 210 772
- JP-A- H07 186 309
- JP-A- 2007 152 690

## Description

### Technical Field

The present invention relates to a device and method for eliminating a defective sheet in Plate-shaped cardboard sheets in which at least a bottom liner, a corrugated medium paper, and a top liner are bonded together and an apparatus for manufacturing a cardboard sheet, which is provided with the device for eliminating a defective sheet.

### Background Art

A corrugating machine as an apparatus for manufacturing a cardboard sheet includes a single facer which forms a single-faced cardboard sheet and a double facer which forms a double-faced cardboard sheet by bonding bottom liner paper to the single-faced cardboard sheet. In the single facer, medium paper (a medium) is processed into a corrugated shape, a top liner is bonded to the corrugated medium paper to form the single-faced cardboard sheet, and in the double facer, the bottom liner is bonded to the single-faced cardboard sheet to form the double-faced cardboard sheet. The continuous double-faced cardboard sheet manufactured by this double facer is cut to a predetermined width by a slitter/scorer and cut to a predetermined length by a cutoff device, so that plate-shaped cardboard sheets are formed.

In the corrugating machine, for example, when the corrugated medium paper is bonded to the top liner to form the single-faced cardboard sheet, there is a case where a defective cardboard sheet is generated due to poor adhesive application, poor pressurization, poor preheating, or the like. For this reason, in the related art, a defective part of a single-faced cardboard sheet is detected, a double-faced cardboard sheet is formed by a double facer, cut to a predetermined width by a slitter/scorer, and cut to a predetermined length by a cutoff device, and then, a plate-shaped cardboard sheet having a defective part is eliminated from a transport line. A corrugating machine provided with such a defect eliminating device is described in, for example, Japanese Unexamined Patent Application Publication No. 2007-152690.

### Summary of Invention

### Technical Problem

Incidentally, a corrugating machine can simultaneously manufacture a plurality of types of cardboard sheets having different widths or different lengths. In this case, a web director device is disposed between a slitter/scorer and a cutoff device. In this case, after a continuous double-faced cardboard sheet is cut to a predetermined width by the slitter/scorer, one double-faced cardboard sheet is transported to an upper stage side and the other double-faced cardboard sheet is transported to a lower stage side. Then, the double-faced cardboard sheets having different widths transported to the upper and lower stages, respectively, are cut to a predetermined length by the cutoff device to produce a plurality of types of plate-shaped cardboard sheets having different widths or different lengths. Such a corrugating machine is described in, for example, Japanese Unexamined Patent Application Publication No. 07-186309.

In a case where a defect eliminating device is provided in the above-described corrugating machine capable of simultaneously manufacturing a plurality of types of cardboard sheets having different widths, a detection unit detects a defective part of a single-faced cardboard sheet, and an eliminating unit eliminates a plate-shaped cardboard sheet having the defective part, among the plate-shaped cardboard sheets cut to a predetermined length, from a transport line. At this time, the detection unit detects only a position of the defective part in a length direction of the single-faced cardboard sheet, and therefore, even if the defective part is present only in the plate-shaped cardboard sheet on the upper stage side, the eliminating unit eliminates the cardboard sheets on both the upper stage side and the lower stage side from the transport line. For this reason, not only the cardboard sheet which is a defective sheet but also the cardboard sheet which is a non-defective sheet is eliminated from the transport line, and thus there is a problem in that the number of cardboard sheets to be discarded wastefully increases, resulting in an increase in manufacturing cost or disposal cost. Japanese Unexamined Patent Application Publication No. 07-186309 represents the closest prior art.

The present invention is to solve the above-mentioned problem and has an object to provide a device and method for eliminating a defective sheet, and an apparatus for manufacturing a cardboard sheet, in which the number of non-defective sheets to be discarded is reduced, and thus an increase in manufacturing cost or disposal cost is suppressed.

### Solution to Problem

This object is solved by a device and method for eliminating a defective sheet with the features of claims 1 and 5, and an apparatus for manufacturing a cardboard sheet with the features of claim 6. Preferred embodiments follow from the other claims. In order to achieve the above object, according to an aspect of the present invention, there is provided a device for eliminating a defective sheet, which eliminates a defective sheet in plate-shaped cardboard sheets formed by bonding a first liner, a corrugated medium paper, and a second liner together, the device including: a defect detection device that detects a position of a defective part in the medium paper; a cutting device that cuts a continuous cardboard sheet to a predetermined width along a transport direction; a cutoff device that cuts off the continuous cardboard sheet to a predetermined length along a width direction to form plate-shaped cardboard sheets; a plurality of transport lines that transport the plate-shaped cardboard sheets; a rejecting device that rejects the plate-shaped cardboard sheets that are transported on the plurality of transport lines from the transport lines; and a control device that specifies the plate-shaped cardboard sheet having the defective part, based on a position of the defective part detected by the defect detection device and a cutting position of the continuous cardboard sheet in the width direction, and operates the rejecting device.

Therefore, the plate-shaped cardboard sheets are formed by cutting the continuous cardboard sheet to a predetermined width and to a predetermined length, and then transported along the plurality of transport lines. Then, the defect detection device detects the position of the defective part in the medium paper, and the control device specifies the plate-shaped cardboard sheet having the defective part, based on the position of the defective part and the cutting position in the width direction in the continuous cardboard sheet, and operates a corresponding rejecting device. For this reason, even if the plurality of plate-shaped cardboard sheets are transported by the respective transport lines, the rejecting device can selectively reject the defective plate-shaped cardboard, which is transported on a specific transport line. As a result, it is possible to reduce the number of non-defective cardboard sheets to be discarded, and thus it is possible to suppress an increase in manufacturing cost or disposal cost.

In the device for eliminating defects in a sheet according to the above aspect of the present invention, the cutting device is preferably a slitter device that cuts the continuous cardboard sheet to a predetermined width along the transport direction, the cutoff device is a cut device that cuts off a plurality of continuous cardboard sheets cut to the predetermined width to a predetermined length along the width direction, and a director device that distributes the plurality of continuous cardboard sheets to the plurality of transport lines, respectively, is provided between the slitter device and the cut device.

Therefore, the slitter device cuts the continuous cardboard sheet to a predetermined width along the transport direction, the director device distributes a plurality of continuous cardboard sheets to the respective transport lines, and the cut device cuts the plurality of continuous cardboard sheets cut to the predetermined width to a predetermined length along the width direction in each transport line. For this reason, the rejecting device can easily reject the plate-shaped cardboard sheet having the defective part, which is transported on a specific transport line.

In the device for eliminating defects in a sheet according to the present invention, the rejecting device includes a plurality of rejecting parts provided corresponding to the plurality of transport lines, and the control device operates the rejecting part provided in the transport line on which the plate-shaped cardboard sheet having the defective part is transported.

Therefore, the control device operates the rejecting part provided in the transport line on which the plate-shaped cardboard sheet having the defective part is transported, and therefore, the rejecting device can easily reject only the plate-shaped cardboard sheet having the defective part.

In the device for eliminating defects in a sheet according to the above aspect of the present invention, the director device preferably distributes one continuous cardboard sheet cut to a predetermined width to an upper stage-side transport line and distributes the other continuous cardboard sheet to a lower stage-side transport line, and the control device specifies whether a transport destination of the plate-shaped cardboard sheet having the defective part is the upper stage-side transport line or the lower stage-side transport line, and operates a rejecting part provided in the specified transport line.

Therefore, the control device specifies the transport line of the plate-shaped cardboard sheet having the defective part and operates the rejecting part provided in the specified transport line, and therefore, the rejecting device can easily reject only the plate-shaped cardboard sheet having the defective part.

In the device for eliminating defects in a sheet according to the above aspect of the present invention, the slitter device preferably cuts the continuous cardboard sheet into a plurality of the continuous cardboard sheets having a predetermined width, and the control device specifies the plate-shaped cardboard sheet having the defective part, based on the position of the defective part detected by the defect detection device and a cutting position of the cardboard sheet cut by the slitter device, and rejects the specified plate-shaped cardboard sheet from the transport line using the rejecting device.

Therefore, the plate-shaped cardboard sheet having the defective part is specified based on the position of the defective part and the cutting position of the cardboard sheet cut by the slitter device and is then rejected, and therefore, the rejecting device can easily reject only the plate-shaped cardboard sheet having the defective part.

According to another aspect of the present invention, there is provided a method for eliminating a defective sheet in plate-shaped cardboard sheets formed by bonding a first liner, a corrugated medium paper, and a second liner together, the method including: a step of detecting a position of a defective part in the medium paper; a step of cutting a continuous cardboard sheet to a predetermined width along a transport direction; a step of cutting off the continuous cardboard sheet to a predetermined length along a width direction to form plate-shaped cardboard sheets; a step of transporting the plate-shaped cardboard sheets along a plurality of transport lines; and a step of specifying as a detective sheet the plate-shaped cardboard sheet having the defective part, based on a position of the defective part and a cutting position of the continuous cardboard sheet in the width direction, and rejecting the specified plate-shaped cardboard sheet from the transport line on which the defective sheet is transported.

Therefore, even if the plurality of plate-shaped cardboard sheets are transported by the plurality of transport lines, the rejecting device can selectively reject the plate-shaped cardboard sheet having the defective part, which is transported on a specific transport line. As a result, it is possible to reduce the number of non-defective cardboard sheets to be discarded, and thus it is possible to suppress an increase in manufacturing cost or disposal cost.

A device for controlling elimination of a detective sheet, which eliminates a defective sheet in plate-shaped cardboard sheets formed by bonding a first liner, a corrugated medium paper, and a second liner together, in a sheet defect eliminating device can include a defect detection device that detects a position of a defective part in the medium paper, a cutting device that cuts a continuous cardboard sheet to a predetermined width along a transport direction, a cutoff device that cuts the continuous cardboard sheet to a predetermined length along a width direction to form plate-shaped cardboard sheets, a plurality of transport lines that are provided side by side in the width direction of the cardboard sheet and transport the plate-shaped cardboard sheets, and a rejecting device that rejects the plate-shaped cardboard sheets that are transported on the plurality of transport lines from the transport lines, in which the device for controlling elimination of defects in a sheet specifies the plate-shaped cardboard sheet having the defective part, based on a position of the defective part detected by the defect detection device and a cutting position of the continuous cardboard sheet in the width direction, and operates the rejecting device.

Therefore, even if the plurality of plate-shaped cardboard sheets are transported by the plurality of transport lines, the rejecting device can selectively reject the defective plate-shaped cardboard sheet, which is transported on a specific transport line. As a result, it is possible to reduce the number of non-defective cardboard sheets to be discarded, and thus it is possible to suppress an increase in manufacturing cost or disposal cost.

Further, according to still yet another aspect of the present invention, there is provided an apparatus for manufacturing a cardboard sheet, including: a single facer that manufactures a single-faced cardboard sheet by bonding a second liner to a corrugated medium paper; a double facer that manufactures a double-faced cardboard sheet by bonding a first liner to the medium paper side of the single-faced cardboard sheet; and the device for eliminating a defective sheet according to the present invention.

Therefore, the single facer manufactures a single-faced cardboard sheet by bonding a second liner to a corrugated medium paper, and the double facer manufactures a double-faced cardboard sheet by bonding a first liner to the medium paper side of the single-faced cardboard sheet which is manufactured by the single facer. At this time, the defect detection device detects the position of the defective part in the medium paper, a control unit specifies the plate-shaped cardboard sheet having the defective part, based on the position of the defective part and the cutting position in the width direction of the continuous cardboard sheet, and operates a corresponding rejecting device. For this reason, even if the plurality of plate-shaped cardboard sheets are transported by the respective transport lines, the rejecting device can selectively reject the plate-shaped cardboard sheets having the defective part, which is transported on a specific transport line. As a result, it is possible to reduce the number of non-defective cardboard sheets to be discarded, and thus it is possible to suppress an increase in manufacturing cost or disposal cost.

### Advantageous Effects of Invention

With the device and method for eliminating defects in a sheet, the device for controlling elimination of defects in a sheet, and the apparatus for manufacturing a cardboard sheet according to the present invention, a plate-shaped cardboard sheet having a defective part is specified based on the position of the defective part and the cutting position in the width direction of the plate-shaped cardboard sheet and rejected, and therefore, it is possible to reduce the number of non-defective cardboard sheets to be discarded, and thus it is possible to suppress an increase in manufacturing cost or disposal cost.

### Brief Description of Drawings

Fig. 1 is a schematic configuration diagram showing a sheet defect eliminating device according to the present embodiment.
Fig. 2 is a schematic diagram showing a corrugating machine as a apparatus for manufacturing a cardboard sheet according to this embodiment.
Fig. 3 is a schematic diagram showing a web director.
Fig. 4-1 is a schematic view showing a transport path of a cardboard sheet which is transported by the web director.
Fig. 4-2 is a schematic view showing a modification example of the transport path of the cardboard sheet which is transported by the web director.
Fig. 4-3 is a schematic view showing a modification example of the transport path of the cardboard sheet which is transported by the web director.
Fig. 4-4 is a schematic view showing a modification example of the transport path of the cardboard sheet which is transported by the web director.
Fig. 5 is a schematic diagram showing a method for eliminating defects in a cardboard sheet.
Fig. 6 is a schematic diagram showing a method for eliminating defects in a cardboard sheet.
Fig. 7 is a schematic diagram showing a method for eliminating defects in a cardboard sheet.

### Description of Embodiments

Hereinafter, preferred embodiments of a device and method for eliminating defects in a sheet, a device for controlling elimination of defects in a sheet, and an apparatus for manufacturing a cardboard sheet according to the present invention will be described in detail with reference to the accompanying drawings. The present invention is not limited by these embodiments, and in a case where there are a plurality of embodiments, configurations which are made by combining the respective embodiments are also included in the present invention.

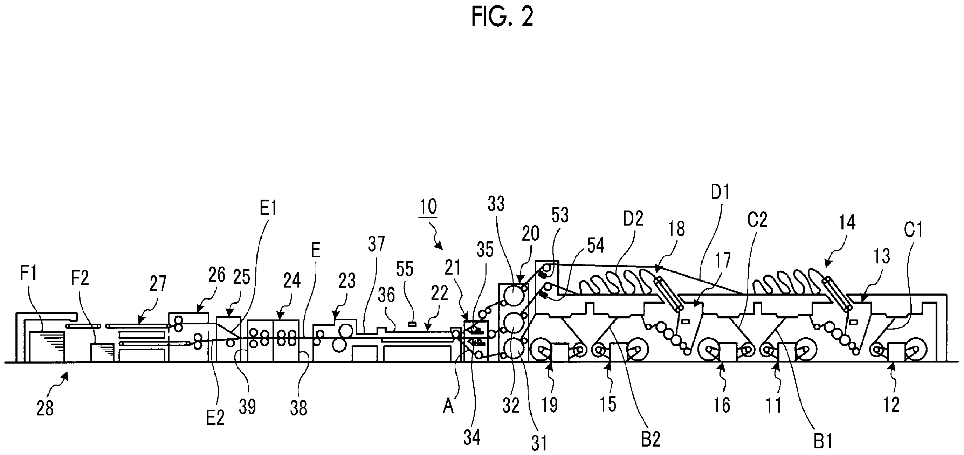

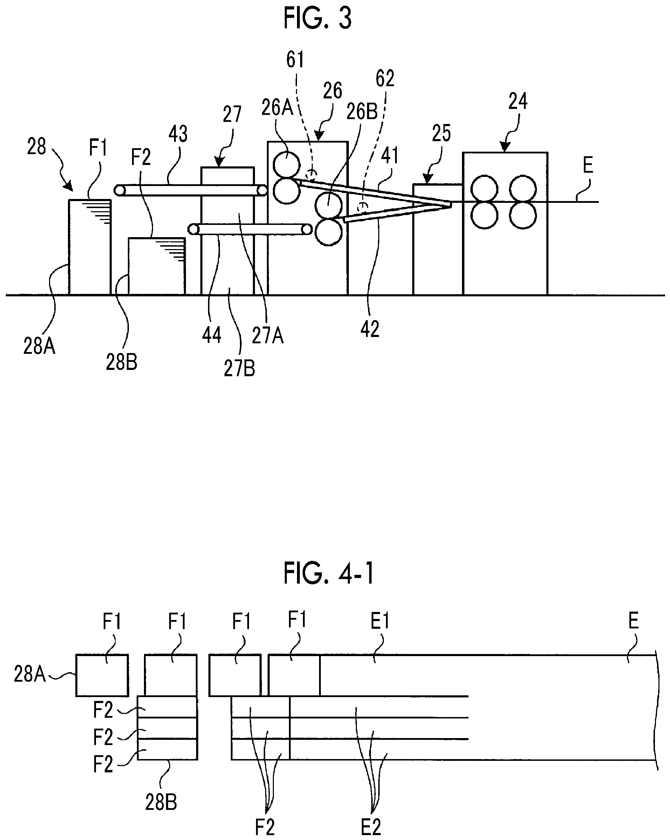

Fig. 2 is a schematic diagram showing a corrugating machine as a apparatus for manufacturing a cardboard sheet according to this embodiment, Fig. 3 is a schematic diagram showing a web director, and Fig. 4-1 is a schematic view showing a transport path of a cardboard sheet which is transported by the web director.

In this embodiment, as shown in Fig. 2, a corrugating machine 10 as a apparatus for manufacturing a cardboard sheet first manufactures a single-faced cardboard sheet D1 by bonding a top liner (a second liner) C1 to a corrugated medium (medium paper) B1 and manufactures a single-faced cardboard sheet D2 by bonding a top liner (a second liner) C2 to a corrugated medium (medium paper) B2. Next, a continuous double-faced cardboard Sheet E is manufactured by bonding the top liner C2 of the single-faced cardboard sheet D2 to the medium B1 of the manufactured single-faced cardboard sheet D1 and bonding a bottom liner (a first liner) A to the medium B2 of the single-faced cardboard sheet D2. Then, plate-shaped double-faced cardboard sheets F (F1, F2) are manufactured by cutting the continuous double-faced cardboard sheet E to a predetermined length.

The corrugating machine 10 includes a mill roll stand 11 for the medium B1, a mill roll stand 12 for the top liner C1, a single facer 13, a bridge 14, a mill roll stand 15 for the medium B2, a mill roll stand 16 for the top liner C2, a single facer 17, a bridge 18, a mill roll stand 19 for the bottom liner A, a preheater (a preheating device) 20, a glue machine 21, a double facer 22, a rotary shear 23, a slitter/scorer (a cutting device or a slitter device) 24, a web director (a director device) 25, a cutoff (a cutoff device or a cut device) 26, a defective sheet rejecting device 27, and a stacker 28.

Rolls of paper, in each of which medium paper for forming each of the mediums B1 and B2 is wounded in a roll shape, are respectively mounted on both sides of each of the mill roll stands 11 and 15, and a splicer which performs paper splicing is provided between the rolls of paper. When paper is being fed from the roll of paper on one side, the roll of paper on the other side is mounted and paper splicing is prepared, and if the remaining of the roll of paper on one side is a small amount, the splicer performs paper splicing of the roll of paper on the other side to the roll of paper on one side. For this reason, paper is continuously fed toward the downstream side from each of the mill roll stands 11 and 15.

Further, rolls of paper, in each of which each of the top liners C1 and C2 is wounded in a roll shape, are respectively mounted on both sides of each of the mill roll stands 12 and 16, and a splicer which performs paper splicing is provided between the rolls of paper. When paper is being fed from the roll of paper on one side, the roll of paper on the other side is mounted and paper splicing is prepared, and if the remaining of the roll of paper on one side is a small amount, the splicer performs paper splicing of the roll of paper on the other side to the roll of paper on one side. For this reason, paper is continuously fed toward the downstream side from each of the mill roll stands 12 and 16.

The mediums B1 and B2 which are fed out from the mill roll stands 11 and 15 and the top liners C1 and C2 which are fed out from the mill roll stands 12 and 16 are each preheated by a preheater (not shown). Each preheater has a heating roll in which steam is supplied to the interior thereof, and each of the mediums B1 and B2 or each of the top liners C1 and C2 is transported with being wound around the heating roll, whereby the temperature thereof rises to a predetermined temperature.

The single facer 13 forms the single-faced cardboard sheet D1 by processing the heated medium B1 in a corrugated shape, then applying an adhesive to the top of each corrugation, and bonding the heated top liner C1 to the corrugated medium B1 with the adhesive applied thereto. In the single facer 13, a pickup conveyor is provided obliquely upward on the downstream side in a transport direction and transports the single-faced cardboard sheet D1 formed in the single facer 13 to the bridge 14. The bridge 14 can primarily retain the single-faced cardboard sheet D1 in order to absorb a speed difference between the single facer 13 and the double facer 22.

Further, the single facer 17 forms the single-faced cardboard sheet D2 by processing the heated medium B2 in a corrugated shape, then applying an adhesive to the top of each corrugation, and bonding the heated top liner C2 to the corrugated medium B2 with the adhesive applied thereto. In the single facer 17, a pickup conveyor is provided obliquely upward on the downstream side in the transport direction and transports the single-faced cardboard sheet D2 formed in the single facer 17 to the bridge 18. The bridge 18 can primarily retain the single-faced cardboard sheet D2 in order to absorb a speed difference between the single facer 17 and the double facer 22.

Rolls of paper, in each of which the bottom liner A is wounded in a roll shape, are respectively mounted on both sides of the mill roll stand 19, and a splicer which performs paper splicing is provided between the rolls of paper. When paper is being fed from the roll of paper on one side, the roll of paper on the other side is mounted and paper splicing is prepared, and if the remaining of the roll of paper on one side is a small amount, the splicer performs paper splicing of the roll of paper on the other side to the roll of paper on one side. For this reason, paper is continuously fed toward the downstream side from the mill roll stand 19.

In the preheater 20, three preheating rolls 31, 32, and 33 are disposed side by side in a vertical direction. The preheating roll 31 is for heating the bottom liner A, the preheating roll 32 is for heating the single-faced cardboard sheet D2, and the preheating roll 33 is for heating the single-faced cardboard sheet D1. Further, each of the preheating rolls 31, 32, and 33 has a winding amount adjusting device (not shown) and is heated to a predetermined temperature by steam which is supplied to the interior thereof, and the bottom liner A, the single-faced cardboard sheet D2, and the single-faced cardboard sheet D1 are respectively wounded around the peripheral surfaces of the preheating rolls 31, 32, and 33, thereby being able to be preheated.

In the glue machine 21, adhesive applicator rolls 34 and 35 are disposed side by side in the vertical direction. The adhesive applicator roll 34 is for performing adhesive application in contact with the respective top portions of the corrugations of the medium B2 in the single-faced cardboard sheet D2 heated by the preheating roll 32. The adhesive applicator roll 35 is for performing adhesive application in contact with the respective top portions of the corrugations of the medium B1 in the single-faced cardboard sheet D1 heated by the preheating roll 33. The single-faced cardboard sheets D1 and D2 applied with an adhesive in the glue machine 21 are transferred to the double facers 22 of the next process. Further, the bottom liner A heated by the preheating roll 31 also passes through the glue machine 21 and is transferred to the double facer 22.

The double facer 22 has a heating section 36 on the upstream side and a cooling section 37 on the downstream side along traveling lines of each of the single-faced cardboard sheets D1 and D2 and the bottom liner A. The single-faced cardboard sheets D1 and D2 and the bottom liner A applied with an adhesive in the glue machine 21 are carried in between a pressurizing belt and a hot plate at the heating section 36 and transferred toward the cooling section 37 together in a state of being overlapped each other. During this transfer, each of the single-faced cardboard sheets D1 and D2 and the bottom liner A are heated while being pressurized, thereby being bonded together to form the continuous double-faced cardboard sheet E, and thereafter, the continuous double-faced cardboard sheet E is naturally cooled while being transported.

The double-faced cardboard sheet E made in the double facer 22 is transferred to the slitter/scorer 24. The slitter/scorer 24 is for cutting a wide double-faced cardboard sheet E along the transport direction so as to have a predetermined width and forming creasing lines extending in the transport direction. The slitter/scorer 24 is configured of a first slitter/scorer unit 38 and a second slitter/scorer unit 39 arranged along the transport direction of the double-faced cardboard sheet E and having substantially the same structure. The wide double-faced cardboard sheet E is cut by the slitter/scorer 24, whereby two types of double-faced cardboard sheets E1 and E2 having a predetermined width are formed.

The web director 25 is for distributing the two types of double-faced cardboard sheets E1 and E2 cut by the slitter/scorer 24 to the upper and lower sides, as shown in Figs. 2 and 3. The web director 25 has a large number of slats in the width direction of each of the double-faced cardboard sheets E1 and E2 which are transported, and the respective slats swing up and down, whereby transport tables 41 and 42 corresponding to the respective double-faced cardboard sheets E1 and E2 are configured. For this reason, for example, the double-faced cardboard sheet E1 cut by the slitter/scorer 24 is transported to the upper side by the first transport table 41, and the double-faced cardboard sheet E2 is transported to the lower side by the second transport table 42.

The cutoff 26 is for cutting the double-faced cardboard sheets E (E1, E2) cut in the transport direction by the slitter/scorer 24 along the width direction, thereby forming the plate-shaped double-faced cardboard sheets F (F1, F2) having a predetermined length. The cutoff 26 is configured of a first cutoff 26A disposed on the upper side corresponding to the double-faced cardboard sheet E1, and a second cutoff 26B disposed on the lower side corresponding to the double-faced cardboard sheet E2.

The defective sheet rejecting device 27 is for rejecting the double-faced cardboard sheets F1 and F2 determined to be defective sheets from the transport line. Transport conveyors 43 and 44 are disposed toward the stacker 28 from the respective cutoffs 26A and 26B. The defective sheet rejecting device 27 is configured of a first defective sheet rejecting part 27A disposed on the upper side corresponding to the double-faced cardboard sheet F1 cut by the first cutoff 26A, and a second defective sheet rejecting part 27B disposed on the lower side corresponding to the double-faced cardboard sheet E2 cut by the second cutoff 26B. The respective defective sheet rejecting parts 27A and 27B drop the double-faced cardboard sheets F1 and F2 determined to be defective sheets downward from the transport conveyors 43 and 44 and reject the double-faced cardboard sheets F1 and F2.

The stacker 28 is for stacking the double-faced cardboard sheets F1 and F2 determined to be non-defective sheets and rejecting them as products to the outside of the machine. The stacker 28 is configured of a first stacker 28A disposed corresponding to the double-faced cardboard sheet F1, and a second stacker 28B disposed corresponding to the double-faced cardboard sheet E2. The respective stackers 28A and 28B transport the double-faced cardboard sheets F1 and F2 determined to be non-defective sheets by the transport conveyors 43 and 44 and stack the double-faced cardboard sheets F1 and F2.

Here, the operation of the slitter/scorer 24, the web director 25, the cutoff 26, the defective sheet rejecting device 27, and the stacker 28 will be described as an example. As shown in Figs. 3 and 4-1, the double-faced cardboard sheet E is cut along the transport direction by the slitter/scorer 24, thereby being divided into one wide double-faced cardboard sheet E1 and three narrow double-faced cardboard sheets E2. Here, the respective double-faced cardboard sheets E2 have the same width. Then, the wide double-faced cardboard sheet E1 is transported to the upper side by the first transport table 41 which is an upper stage-side transport line in the web director 25, and each of the narrow double-faced cardboard sheets E2 is transported to the lower side by the second transport table 42 which is a lower stage-side transport line in the web director 25.

The wide double-faced cardboard sheet E1 transported to the upper side by the first transport table 41 is cut in the width direction by the first cutoff 26A, thereby being formed into the plate-shaped double-faced cardboard sheets F1 having a predetermined length, which are stacked on the first stacker 28A. Further, each of the narrow double-faced cardboard sheets E2 transported to the lower side by the second transport table 42 is cut in the width direction by the second cutoff 26B, thereby being formed into the plate-shaped double-faced cardboard sheets F2 having a predetermined length, which are stacked on the second stacker 28B. At this time, when defective parts are present in the plate-shaped double-faced cardboard sheets F1 and F2, the plate-shaped double-faced cardboard sheets F1 and F2, which are defective sheets, are dropped downward from the respective transport conveyors 43 and 44 by the operation of the respective defective sheet rejecting parts 27A and 27B, and rejected from the transport line.

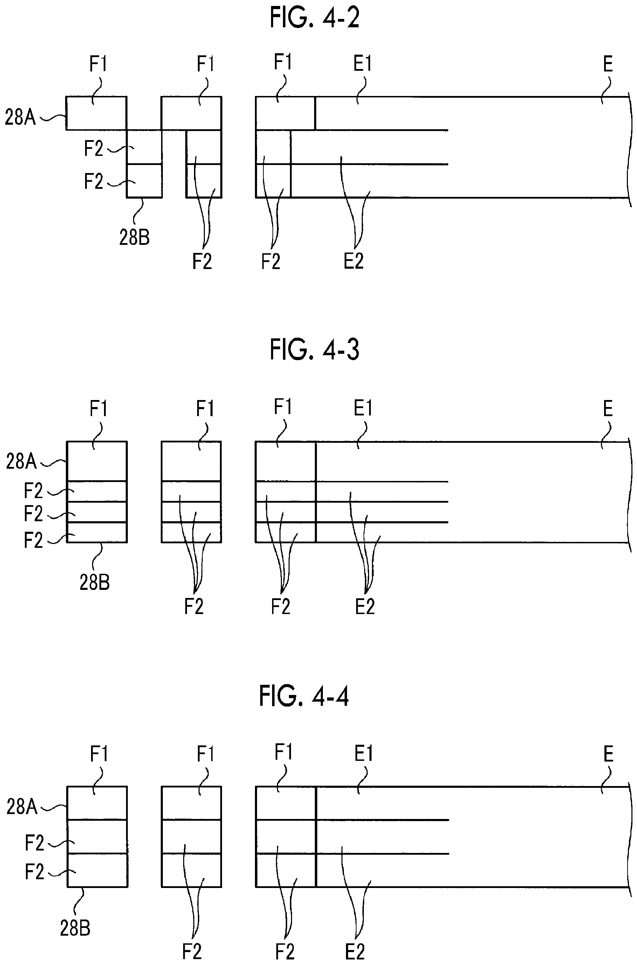

The operation modes of the slitter/scorer 24, the web director 25, the cutoff 26, the defective sheet rejecting device 27, and the stacker 28 are not limited to those described above. Figs. 4-2 to 4-4 are schematic diagrams showing modification examples of the transport path of the cardboard sheet which is transported by the web director.

As shown in Figs. 3 and 4-2, the double-faced cardboard sheet E is cut along the transport direction by the slitter/scorer 24, thereby being divided into three double-faced cardboard sheets E1, E2, and E2 having the same width. Then, the double-faced cardboard sheet E1 is transported to the upper side by the first transport table 41 in the web director 25, and each of the double-faced cardboard sheets E2 is transported to the lower side by the second transport table 42 in the web director 25. The double-faced cardboard sheet E1 transported to the first transport table 41 is cut in the width direction by the first cutoff 26A, thereby being formed into the plate-shaped double-faced cardboard sheets F1 having a predetermined length, which are stacked on the first stacker 28A. Further, each of the double-faced cardboard sheets E2 transported to the second transport table 42 is cut in the width direction by the second cutoff 26B, thereby being formed into the plate-shaped double-faced cardboard sheets F2 having a shorter length than the double-faced cardboard sheet F1, and the plate-shaped double-faced cardboard sheets F2 are stacked on the second stacker 28B. At this time, when defective parts are present in the plate-shaped double-faced cardboard sheets F1 and F2, the plate-shaped double-faced cardboard sheets F1 and F2, which are defective sheets, are dropped downward from the respective transport conveyors 43 and 44 by the operation of the respective defective sheet rejecting parts 27A and 27B, and rejected from the transport line.

As shown in Figs. 3 and 4-3, the double-faced cardboard sheet E is cut along the transport direction by the slitter/scorer 24, thereby being divided into one wide double-faced cardboard sheet E1 and three narrow double-faced cardboard sheets E2. Here, the respective double-faced cardboard sheets E2 have the same width. Then, the double-faced cardboard sheet E1 is transported to the upper side by the first transport table 41 in the web director 25, and each of the double-faced cardboard sheets E2 is transported to the lower side by the second transport table 42 in the web director 25. The double-faced cardboard sheet E1 transported to the first transport table 41 is cut in the width direction by the first cutoff 26A, thereby being formed into the plate-shaped double-faced cardboard sheets F1 having a predetermined length, which are stacked on the first stacker 28A. Further, each of the double-faced cardboard sheets E2 transported to the second transport table 42 is cut in the width direction by the second cutoff 26B, thereby being formed into the plate-shaped double-faced cardboard sheets F2 having the same length as the double-faced cardboard sheet F1, and the plate-shaped double-faced cardboard sheets F2 are stacked on the second stacker 28B. At this time, when defective parts are present in the plate-shaped double-faced cardboard sheets F1 and F2, the plate-shaped double-faced cardboard sheets F1 and F2, which are defective sheets, are dropped downward from the respective transport conveyors 43 and 44 by the operation of the respective defective sheet rejecting parts 27A and 27B, and rejected from the transport line.

As shown in Figs. 3 and 4-4, the double-faced cardboard sheet E is cut along the transport direction by the slitter/scorer 24, thereby being divided into three double-faced cardboard sheets E1, E2, and E2 having the same width. Then, the double-faced cardboard sheet E1 is transported to the upper side by the first transport table 41 in the web director 25, and each of the double-faced cardboard sheets E2 is transported to the lower side by the second transport table 42 in the web director 25. The double-faced cardboard sheet E1 transported to the first transport table 41 is cut in the width direction by the first cutoff 26A, thereby being formed into the plate-shaped double-faced cardboard sheets F1 having a predetermined length, which are stacked on the first stacker 28A. Further, each of the double-faced cardboard sheets E2 transported to the second transport table 42 is cut in the width direction by the second cutoff 26B, thereby being formed into the plate-shaped double-faced cardboard sheets F2 having the same length as the double-faced cardboard sheet F1, and the plate-shaped double-faced cardboard sheets F2 are stacked on the second stacker 28B. In this case, the double-faced cardboard sheets F1 and F2 have the same size. However, for example, in a case where the double-faced cardboard sheet F1 is not printed in the post-process and the double-faced cardboard sheet F2 is printed, if the stackers on which the double-faced cardboard sheets F1 and the double-faced cardboard sheets F2 are stacked are separated, it is sufficient if only the double-faced cardboard sheets F1 stacked on the first stacker 28A are printed, and therefore, processing is smooth. At this time, when defective parts are present in the plate-shaped double-faced cardboard sheets F1 and F2, the plate-shaped double-faced cardboard sheets F1 and F2, which are defective sheets, are dropped downward from the respective transport conveyors 43 and 44 by the operation of the respective defective sheet rejecting parts 27A and 27B, and rejected from the transport line.

Here, a case where one type or two types of double-faced cardboard sheets F are manufactured has been described. However, there is no limitation thereto, and a configuration may be made such that three or more types of double-faced cardboard sheets F having different widths and different lengths are manufactured. In this case, it is sufficient if the transport lines, the defective sheet rejecting parts, and the stackers are disposed according to the types of the double-faced cardboard sheets F.

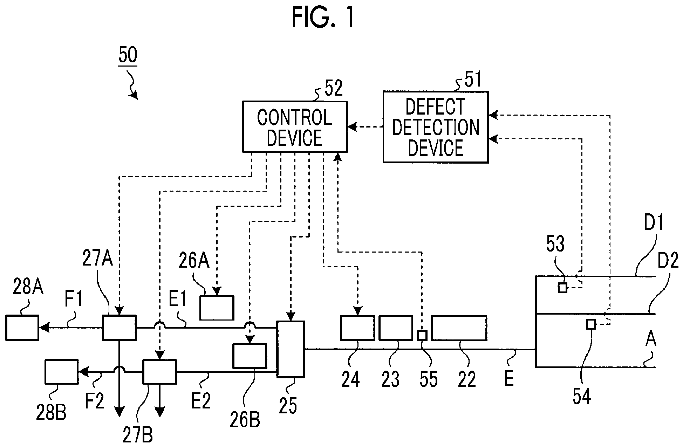

Hereinafter, a sheet defect eliminating device according to this embodiment will be described. Fig. 1 is a schematic configuration diagram showing the sheet defect eliminating device according to this embodiment.

In this embodiment, as shown in Fig. 1, a sheet defect eliminating device 50 is for eliminating defective sheets of the plate-shaped cardboard sheets F formed by bonding the bottom liner A, the corrugated mediums B1 and B2 and the top liners C1 and C2. The sheet defect eliminating device 50 includes a defect detection device 51, the slitter/scorer 24 as a cutting device, the cutoff 26 (26A, 26B) as a cutoff device, the web director 25, the defective sheet rejecting device 27 (27A, 27B), and a control device 52.

The defect detection device 51 is for detecting a defective part of the mediums B1 and B2 in the single-faced cardboard sheets D1 and D2 and the position of the defective part. The defect detection device 51 has defect detection sensors 53 and 54 which are disposed on the side of the mediums B1 and B2 (the lower side in the drawing) in the single-faced cardboard sheets D1 and D2 between the bridge 18 and the preheater 20 (refer to Fig. 2). Each of the defect detection sensors 53 and 54 is configured of, for example, an irradiation device which irradiates light toward each of the mediums B1 and B2 of the single-faced cardboard sheets D1 and D2, and an imaging device which captures an image of a light-irradiated portion in each of the mediums B1 and B2. The defect detection device 51 detects the regions of the defective parts in the single-faced cardboard sheets D1 and D2 by defining a bright portion and a dark portion along the transport direction of each of the single-faced cardboard sheets D1 and D2, based on the image captured by the imaging device, and determining pass or fail by comparing the length of the bright portion and the length of the dark portion with determination values set in advance. That is, if poor adhesive application, poor pressurization, poor preheating, or the like of the mediums B1 and B2 occur, the height of a mountain of each of the mediums B1 and B2 varies, so that the medium is regarded as a defective product, and therefore, the height of the mountain of each of the mediums B1 and B2 is detected as a shadow, and if the shape thereof deviates from a determination shape set in advance, it is determined as a defective part.

An application relating such a defect detection device for a cardboard sheet is filed as Japanese Patent Application No. 2016-015363 by the applicant of this application. However, the defect detection device 51 of this embodiment is not limited to this configuration.

The control device 52 receives a detection result from the defect detection device 51. The control device 52 specifies the plate-shaped double-faced cardboard sheet F1 or F2 in which a defective part is present, based on the position of the defective part detected by the defect detection device 51 and the cutting position in the width direction in the double-faced cardboard sheet E, and operates each of the defective sheet rejecting parts 27A and 27B corresponding thereto. That is, the control device 52 has data on the width and the length of each of the plate-shaped double-faced cardboard sheets F1 and F2 to be manufactured, due to functioning as a production management device, and grasps a cutting position in the width direction, where the continuous double-faced cardboard sheet E is cut by the slitter/scorer 24, distributed positions of the cut double-faced cardboard sheets E1 and E2 which are distributed to the upper stage and the lower stage by the web director 25, and a cutting position in the transport direction, where the continuous double-faced cardboard sheet E is cut by the cutoff 26. Further, a speed sensor 55 is disposed in the vicinity of the double facer 22, and the control device 52 receives the transport speed of the double-faced cardboard sheet E detected by the speed sensor 55.

For this reason, the control device 52 has grasped the transport distance from the defect detection device 51 to each of the defective sheet rejecting parts 27A and 27B in advance, and therefore, a time after the defect detection device 51 detects the defective part and until the defective part reaches each of the defective sheet rejecting parts 27A and 27B is calculated by dividing the transport distance by the transport speed. Further, the control device 52 has grasped the cutting position in the width direction, the distributed positions to the upper and lower stages, and the cutting position in the transport direction in the double-faced cardboard sheet E, and therefore, it is possible to determine the plate=shaped double-faced cardboard sheets F1 and F2 in which the detected defective part is present, among a plurality of plate-shaped double-faced cardboard sheets F1 and F2 which are cut and transported in the width direction (an upper-and-lower-stage direction) and the transport direction.

The control device 52 operates the defective sheet rejecting parts 27A and 27B provided in the transport conveyors (transport lines) 43 and 44 on which the plate-shaped double-faced cardboard sheets F1 and F2 in which a defective part is present are transported, at a predetermined timing. At this time, the control device 52 specifies whether a transport destination of the plate-shaped double-faced cardboard sheets F1 and F2 in which a defective part is present is the upper stage-side transport conveyor 43 or the lower stage-side transport conveyor 44, and operates the defective sheet rejecting part 27A or 27B provided in the specific transport conveyor 43 or 44, thereby rejecting the specified plate-shaped double-faced cardboard sheet F1 or F2 in which a defective part is present from the transport line.

Here, the operation of the sheet defect eliminating device according to this embodiment will be described.

As shown in Figs. 1 and 2, in the mill roll stand 11 , the roll of paper rotates, whereby the medium B1 is fed out, and in the mill roll stand 12, the roll of paper rota tes, whereby the top liner C1 is fed out. Then, after the medium B1 is corrugated, an adhesive is applied to the to p portion of each corrugation, and the medium B1 is bonded to the top liner C1 by the single facer 13, so that the s ingle-faced cardboard sheet D1 is formed. Similarly, in the mil 1 roll stand 15, the roll of paper rotates, whereby the me dium B2 is fed out, and in the mill roll stand 16, the rol 1 of paper rotates, whereby the top liner C2 is fed out. Then, after the medium B2 is corrugated, an adhesive is ap plied to the top portion of each corrugation, and the medi um B2 is bonded to the top liner C2 by the single facer 17 , so that the single-faced cardboard sheet D2 is formed.

Further, in the mill roll stand 19, the roll of paper rotates, whereby the bottom liner A is fed out. The bottom liner A and each of the single-faced cardboard sheets D1 and D2 are heated by the preheater 20, then applied with an adhesive by the glue machine 21, and bonded together by the double facer 22, so that the continuous double-faced cardboard sheet E is formed. The continuous double-faced cardboard sheet E is cut along the transport direction by the slitter/scorer 24 and creasing lines are formed therein. Then, two types of continuous double-faced cardboard sheets E1 and E2 are distributed to the respective transport tables 41 and 42 by the web director 25, and the double-faced cardboard sheets F1 and F2 having a predetermined length are formed by the cutoff 26. The plate-shaped double-faced cardboard sheets F1 and F2 are transported by the transport conveyors 43 and 44 and stacked on the stacker 28.

At this time, the defect detection device 51 detects the defective part of the mediums B1 and B2 in the single-faced cardboard sheets D1 and D2, and the position of the defective part. The control device 52 calculates, for example, the position (region) of the defective part in the transport direction (a longitudinal direction) of the single-faced cardboard sheets D1 and D2 and the position (region) of the defective part in the width direction, based on the detection result from the defect detection device 51. Further, the control device 52 calculates a time during which the defective part reaches each of the defective sheet rejecting parts 27A and 27B, based on the transport distance and the transport speed from the defect detection device 51 to each of the defective sheet rejecting parts 27A and 27B. Further, the control device 52 determines whether the defective part has been transported to the upper stage-side transport conveyor 43 side or to the lower stage-side transport conveyor 44, based on the cutting position in the width direction in the double-faced cardboard sheet E. Then, when the plate-shaped double-faced cardboard sheets F1 and F2 in which a defective part is present has reached the defect rejecting device 27, the control device 52 operates the relevant defective sheet rejecting parts 27A and 27B to reject the plate-shaped double-faced cardboard sheets F1 and F2 from the transport lines.

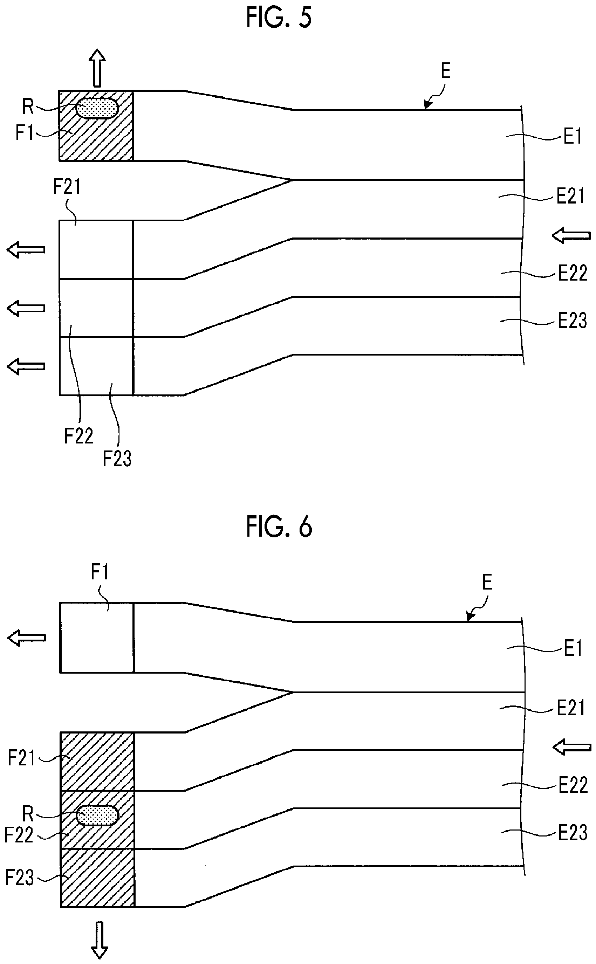

Here, a method of rejecting the plate-shaped double-faced cardboard sheets F1 and F2 in which a defective part is present will be described in detail. Figs. 5 to 7 are schematic diagrams showing a method for eliminating defects in a cardboard sheet.

As shown in Fig. 5, the continuous double-faced cardboard sheet E is first cut along the transport direction by the slitter/scorer 24, thereby being divided into one wide continuous double-faced cardboard sheet E1 and three narrow continuous double-faced cardboard sheets E21, E22, and E23. Next, the wide continuous double-faced cardboard sheet E1 is transported to the upper stage-side transport line by the web director 25, and the narrow continuous double-faced cardboard sheets E21, E22, and E23 are transported to the lower stage-side transport line by the web director 25. Then, the continuous double-faced cardboard sheet E1 transported to the upper stage-side transport line is cut in the width direction by the first cutoff 26A to form the plate-shaped double-faced cardboard sheet F1, and the continuous double-faced cardboard sheets E21, E22, and E23 transported to the lower stage-side transport line are cut in the width direction by the second cutoff 26B to form plate-shaped double-faced cardboard sheets F21, F22, and F23.

At this time, if a defective part R is present in the plate-shaped double-faced cardboard sheet F1 transported to the upper stage-side transport line, the defective sheet rejecting part 27A is operated to reject the plate-shaped double-faced cardboard sheet F1 as a defective sheet from the transport line. On the other hand, the defective part R is not present in the plate-shaped double-faced cardboard sheets F21, F22, and F23 transported to the lower stage-side transport line, and therefore, the plate-shaped double-faced cardboard sheets F21, F22, and F23 are transported as non-defective sheets and stacked on the second stacker 28B.

Further, as shown in Fig. 6, if the defective part R is present in the plate-shaped double-faced cardboard sheet F22 transported to the lower stage-side transport line, the defective sheet rejecting part 27B is operated to reject the plate-shaped double-faced cardboard sheets F21 and F23 along with the plate-shaped double-faced cardboard sheet F22 as defective sheets from the transport line. On the other hand, the defective part R is not present in the plate-shaped double-faced cardboard sheet F1 transported to the upper stage-side transport line, and therefore, the plate-shaped double-faced cardboard sheet F1 is transported as a non-defective sheet and stacked on the first stacker 28A.

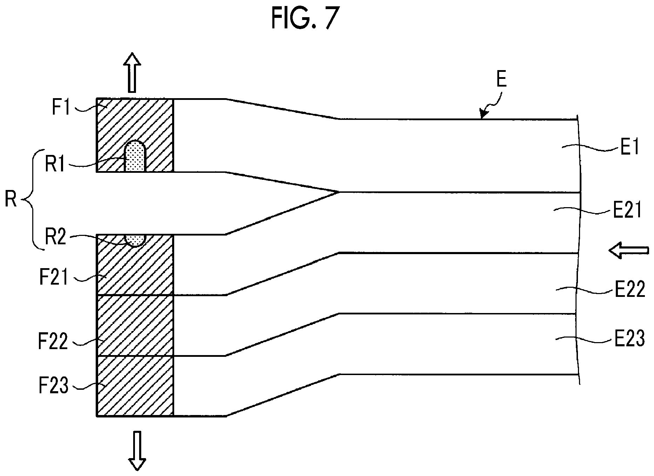

Further, as shown in Fig. 7, if a defective part R1 is present in the plate-shaped double-faced cardboard sheet F1 transported to the upper stage-side transport line and a defective part R2 is present in the plate-shaped double-faced cardboard sheet F21 transported to the lower stage-side transport line, both the defective sheet rejecting parts 27A and 27B are operated to reject all the plate-shaped double-faced cardboard sheets F1, F21, F22, and F23 as defective sheets from the transport lines.

The accuracy of the position detection of the defective part R by the defect detection device 51 depends on the detection accuracy of the defect detection sensors 53 and 54. For this reason, in a case where an inexpensive defect detection sensor is used or the defect detection sensors are disposed thin, the accuracy of the position detection of the defective part R by the defect detection device 51 is lowered. For this reason, for example, even in a case where it is determined that the defective part R is present in the double-faced cardboard sheet F1 and it is determined that the defective part R is not present in the double-faced cardboard sheets F21, F22, and F23, when the distance between an end portion of the defective part R of the double-faced cardboard sheet F1 and a side end of the double-faced cardboard sheet F21 adjacent thereto is within a predetermined short distance, due to a decrease in detection accuracy, in fact, it is estimated that the defective part R is present in the double-faced cardboard sheet F21, and therefore, the double-faced cardboard sheet F21 may be determined as a defective sheet. Further, there is a case where the continuous double-faced cardboard sheet meanders in the width direction between the defect detection device 51 and the slitter/scorer 24 and a meandering phenomenon in which the position in the width direction varies occurs, and also in this respect, in a case where the distance between the end portion of the defective part R of the double-faced cardboard sheet F1 and the side end of the double-faced cardboard sheet F21 adjacent thereto is within a predetermined short distance, so that it is estimated that the defective part R is present in the double-faced cardboard sheet F21, similarly, the double-faced cardboard sheet F21 may be determined as a defective sheet.

Further, as shown in Fig. 6, if the defective part R is present in the plate-shaped double-faced cardboard sheet F22 transported to the lower stage-side transport line, all the plate-shaped double-faced cardboard sheets F21, F22, and F23 transported to the lower stage-side transport line are rejected as defective sheets from the transport line. However, there is no limitation to this case. For example, a configuration may be made such that the second defective sheet rejecting part 27B provided in the transport conveyor 44 as the lower stage-side transport line is divided into three parts in accordance with the respective double-faced cardboard sheets F21, F22, and F23 and the divided parts operate independently. Then, if the defective part R is present in the plate-shaped double-faced cardboard sheet F22 transported to the lower stage-side transport line, only the double-faced cardboard sheet F22 is rejected as a defective sheet from the transport line and the double-faced cardboard sheets F21 and F23 are stacked as non-defective sheets on the second stacker 28B.

Further, here, one continuous double-faced cardboard sheet E1 is distributed to the transport table 41 side and three consecutive double-faced cardboard sheets E21, E22, and E23 are distributed to the transport table 42. However, the three continuous double-faced cardboard sheets E21, E22, and E23 may be distributed to the transport table 41 side. In this case, a configuration may be made such that the defective sheet rejecting part 27A is divided into three parts in accordance with the respective double-faced cardboard sheets F21, F22, and F23 and the divided parts operate independently.

In this manner, the sheet defect eliminating device of this embodiment is for eliminating a defective sheet in the plate-shaped double-faced cardboard sheet F formed by bonding the bottom liner A, the corrugated mediums B1 and B2, and the top liners C1 and C2 together, and is provided with the defect detection device 51 that detects the position of the defective part R in the mediums B1 and B2, the slitter/scorer 24 that cuts the continuous double-faced cardboard sheet E to a predetermined width along the transport direction, the cutoff 26 that cuts the plurality of continuous double-faced cardboard sheets E1 and E2 cut to the predetermined width, to a predetermined length along the width direction, the web director 25 that distributes the plurality of continuous double-faced cardboard sheets E1 and E2 to the respective transport tables 41 and 42, the defective sheet rejecting device 27 that rejects the plate-shaped double-faced cardboard sheets F1 and F2 from the transport line, and the control device 52 that specifies the plate-shaped double-faced cardboard sheet F1 or F2 in which the defective part R is present, based on the position of the defective part R and the cutting position in the width direction in the continuous double-faced cardboard sheets E1 and E2, and operates a corresponding defective sheet rejecting device 27.

Therefore, the plate-shaped double-faced cardboard sheets F1 and F2 are formed by cutting the continuous double-faced cardboard sheets E1 and E2 to a predetermined width and to a predetermined length and are then transported along a plurality of transport lines. Then, the defect detection device 51 detects the position of the defective part R in the mediums B1 and B2, and the control device 52 specifies the plate-shaped double-faced cardboard sheet F1 or F2 in which the defective part R is present, based on the position of the defective part R and the cutting position in the width direction in the continuous double-faced cardboard sheets E1 and E2, and rejects the specified plate-shaped double-faced cardboard sheet F1 or F2. For this reason, even if the plurality of plate-shaped double-faced cardboard sheets F1 and F2 are transported by the respective transport lines, the defective sheet rejecting device 27 can selectively reject the plate-shaped double-faced cardboard sheet F1 or F2 in which the defective part R is present, and which is transported on a specific transport line. As a result, it is possible to reduce the number of non-defective double-faced cardboard sheets to be discarded, and thus it is possible to suppress an increase in manufacturing cost or disposal cost.

In the sheet defect eliminating device of this embodiment, as the defective sheet rejecting device 27, the plurality of defective sheet rejecting parts 27A and 27B are provided corresponding to a plurality of transport lines, and the control device 52 operates the defective sheet rejecting parts 27A or 278B provided in the transport line on which the plate-shaped double-faced cardboard sheet F1 or F2 in which the defective part R is present is transported. Therefore, it is possible to easily reject only the plate-shaped double-faced cardboard sheet F1 or F2 in which the defective part R is present.

In the sheet defect eliminating device of this embodiment, the control device 52 specifies the transport line for the plate-shaped double-faced cardboard sheet F1 or F2 in which the defective part R is present, and operates the defective sheet rejecting part 27A or 27B provided in the specific transport line. Therefore, it is possible to easily reject only the plate-shaped double-faced cardboard sheet F1 or F2 in which the defective part R is present.

In the sheet defect eliminating device of this embodiment, the slitter/scorer 24 cuts the continuous double-faced cardboard sheet E into a plurality of continuous double-faced cardboard sheets E1 and E2 having different widths, and cuts the continuous double-faced cardboard sheet E2 cut to a predetermined width into a plurality of continuous double-faced cardboard sheets E21, E22, and E23 having the same width, and the control device 52 specifies the plate-shaped double-faced cardboard sheet F1 or F2 in which the defective part R is present, based on the position of the defective part R detected by the defect detection device 51 and the cutting positions of the double-faced cardboard sheets E21, E22, and E23 cut by the slitter/scorer 24, and rejects the specified plate-shaped double-faced cardboard sheet F1 or F2 from the transport line. Therefore, it is possible to easily reject only the plate-shaped double-faced cardboard sheet F1 or F2 in which the defective part R is present.

Further, the method for eliminating defects in a sheet according to this embodiment includes a step of detecting the position of the defective part R in the mediums B1 and B2, a step of cutting the continuous double-faced cardboard sheet E to a predetermined width along the transport direction and to a predetermined length along the width direction to form the plate-shaped double-faced cardboard sheets F1 and F2, a step of transporting the plate-shaped double-faced cardboard sheets F1 and F2 along a plurality of transport lines, and a step of specifying the plate-shaped double-faced cardboard sheet F1 or F2 in which the defective part R is present, based on the position of the defective part R and the cutting position in the width direction in the continuous double-faced cardboard sheet E, and rejecting the specified plate-shaped double-faced cardboard sheet F1 or F2 from the transport line.

Therefore, even if the plurality of plate-shaped double-faced cardboard sheets F1 and F2 are transported by the respective transport lines, the defective sheet rejecting device 27 can selectively reject the plate-shaped double-faced cardboard sheet F1 or F2 in which the defective part R is present, and which is transported on a specific transport line. As a result, it is possible to reduce the number of non-defective double-faced cardboard sheets to be discarded, and thus it is possible to suppress an increase in manufacturing cost or disposal cost.

Further, a device for controlling elimination of defects in a sheet according to this embodiment specifies the plate-shaped double-faced cardboard sheet F1 or F2 in which the defective part R is present, based on the position of the defective part R and the cutting position in the width direction in the continuous double-faced cardboard sheets E1 and E2, and operates the defective sheet rejecting device 27. Therefore, even if the plurality of plate-shaped double-faced cardboard sheets F1 and F2 are transported by the respective transport lines, the defective sheet rejecting device 27 can selectively reject the plate-shaped double-faced cardboard sheet F1 or F2 in which the defective part R is present, and which is transported on a specific transport line. As a result, it is possible to reduce the number of non-defective double-faced cardboard sheets to be discarded, and thus it is possible to suppress an increase in manufacturing cost or disposal cost.

Further, an apparatus for manufacturing a cardboard sheet according to this embodiment specifies the plate-shaped double-faced cardboard sheet F1 or F2 in which the defective part R is present, based on the position of the defective part R in the single-faced cardboard sheets D1 and D2 and the cutting position in the width direction in the continuous double-faced cardboard sheets E1 and E2, and operates a corresponding defective sheet rejecting device 27. Therefore, even if the plurality of plate-shaped double-faced cardboard sheets F1 and F2 are transported by the respective transport lines, the defective sheet rejecting device 27 can selectively reject the plate-shaped double-faced cardboard sheet F1 or F2 in which the defective part R is present, and which is transported on a specific transport line. As a result, it is possible to reduce the number of non-defective double-faced cardboard sheets to be discarded, and thus it is possible to suppress an increase in manufacturing cost or disposal cost.

In the embodiment described above, in the corrugating machine 10, the web director 25 is provided, whereby upper and lower transport lines are configured, and the cutoffs 26A and 26B, the defective sheet rejecting parts 27A and 27B, and the stackers 28A and 28B are disposed at the respective transport lines. However, a configuration may be made in which three or more transport lines are configured by the web director 25 and the cutoff, the defective sheet rejecting part, and the stacker are disposed at each of the transport lines.

Further, a configuration may be made in which a plurality of transport lines for transporting the plurality of continuous double-faced cardboard sheets E cut by the slitter/scorer 24 are provided without providing the web director 25, the defective sheet rejecting parts are disposed at the respective transport lines, and when a defective part is present in some of plate-shaped double-faced cardboard sheets F among the plurality of plate-shaped double-faced cardboard sheets F, only the plate-shaped double-faced cardboard sheet F in which the defective part is present is rejected as a defective sheet from the transport line, and other plate-shaped double-faced cardboard sheets F in which a defective part is not present are stacked as non-defective sheets on the stacker from the transport line.

Further, in the embodiment described above, the control device 52 grasps the transport distance from the defect detection device 51 to each of the defective sheet rejecting parts 27A and 27B in advance, and therefore, a time after the defect detection device 51 detects the defective part and until the defective part reaches each of the defective sheet rejecting parts 27A and 27B is calculated by dividing the transport distance by the transport speed. However, there is no limitation to this configuration. For example, a configuration may be made in which the transport distance is obtained by integrating the transport speed with the time when the defect detection device 51 has detected the defective part as the base point, it is determined that the plate-shaped double-faced cardboard sheet F in which the defective part is present has been transported by the distance from the defect detection device 51 to each of the defective sheet rejecting parts 27A and 27B, and each of the defective sheet rejecting parts 27A and 27B is operated. In this case, even in a case where the transport speed does not become constant after the defect detection device 51 detects the defective part, the transport distance is obtained by integrating the transport speed, and therefore, it is possible to operate each of the defective sheet rejecting parts 27A and 27B at a suitable timing.

Further, in the embodiment described above, as shown by a dotted and dashed line in Fig. 3, measuring wheels 61 and 62 which rotate in contact with the surface of the double-faced cardboard sheet E and measure the transport distance from the number of rotations thereof may be provided on the respective transport tables (transport lines) 41 and 43 on which the double-faced cardboard sheet E is transported. The measuring wheels 61 and 62 measure a distance by which the double-faced cardboard sheet E has been transported from the point in time when the defective part of the double-faced cardboard sheet E has been detected, and the control device 52 operates each of the defective sheet rejecting parts 27A and 27B at a timing when the measured transport distance becomes equal to the transport distance from the defect detection device 51 to each of the defective sheet rejecting parts 27A and 27B. In this case, the transport distance of the double-faced cardboard sheet E is directly measured by the measuring wheels 61 and 62, and therefore, it is possible to operate each of the defective sheet rejecting parts 27A and 27B at a suitable timing.

Further, in the embodiment described above, the corrugating machine 10 is for manufacturing a double wall cardboard sheet in which the single-faced cardboard sheet D1, the single-faced cardboard sheet D2, and the bottom liner A are bonded together. However, the corrugating machine 10 may be for manufacturing a double-faced cardboard sheet in which the single-faced cardboard sheet D2 and the bottom liner A are bonded together.

### Reference Signs List

10: corrugating machine (apparatus for manufacturing a cardboard sheet)
11, 12, 15, 16, 19: mill roll stand
13, 17: single facer
14, 18: bridge
20: preheater
21: glue machine
22: double facer
23: rotary shear
24: slitter/scorer (cutting device, slitter device)
25: web director (director device)
26: cutoff (cutoff device, cut device)
27: defective sheet rejecting device
27A: first defective sheet rejecting part
27B: second defective sheet rejecting part
28: stacker
28A: first stacker
28B: second stacker
41: first transport table (transport line)
42: second transport table (transport line)
43: upper stage-side transport conveyor (transport line)
44: lower stage-side transport conveyor (transport line)
50: sheet defect eliminating device
51: defect detection device
52: control device
53, 54: defect detection sensor
55: speed sensor
A: bottom liner (first liner)
B1, B2: medium (medium paper)
C1, C2: top liner (second liner)
D1, D2: single-faced cardboard sheet
E, E1, E2, E21, E22, E23: continuous double-faced cardboard sheet
F, F1, F2, F21, F22, F23: plate-shaped double-faced cardboard sheet
R: defective part

## Claims

1. A device (50) for eliminating a defective sheet in a plate-shaped cardboard sheets (F) each formed by bonding a first liner (A), a corrugated medium paper (B1, B2), and a second liner (C1, C2) together, the device (50) comprising:
a defect detection device (51) that detects a position of a defective part (R) in the medium paper (B1, B2) ;
a cutting device (24) that cuts a continuous cardboard sheet (E) to a predetermined width along a transport direction;
a cutoff device (26) that cuts off the continuous cardboard sheet (E1, E2) to a predetermined length along a width direction to form plate-shaped cardboard sheets (F1, F2) ;
a plurality of transport lines (41, 42) that transport the plate-shaped cardboard sheets (F1, F2); and
a rejecting device (27) that
includes a plurality of rejecting parts (27A, 27B) provided corresponding to the plurality of transport lines (41, 42), and
rejects the plate-shaped cardboard sheets (F1, F2) that are transported on the plurality of transport lines (41, 42) from the transport lines (41, 42),
**characterized by** further comprising
a control device (52) that specifies, as a defective sheet, the plate-shaped cardboard sheet (F1, F2) having the defective part (R), based on a position of the defective part (R) detected by the defect detection device (51) and a cutting position of the continuous cardboard sheet (E1, E2) in the width direction, and operates the rejecting part (27A, 27B) provided in the transport line (41, 42) on which the defective sheet is transported, so as to reject the defective sheet.

2. The device (50) for eliminating a defective sheet according to claim 1,
wherein the cutting device (24) is a slitter device that cuts the continuous cardboard sheet (E) to a predetermined width along the transport direction,
the cutoff device (26) is a cut device that cuts off a plurality of continuous cardboard sheets (E1, E2) cut to the predetermined width to a predetermined length along the width direction, and
a director device (25) that distributes the plurality of continuous cardboard sheets (E1, E2) to the plurality of transport lines (41, 42), respectively, is provided between the slitter device (24) and the cut device (26).

3. The device (50) for eliminating a defective sheet according to claim 2,
wherein the director device (25) distributes one continuous cardboard sheet (E1) cut to a predetermined width to an upper stage-side transport line (41) and distributes the other continuous cardboard sheet (E2) to a lower stage-side transport line (42), and
the control device (52) specifies whether a transport destination of the plate-shaped cardboard sheet having the defective part (R) is the upper stage-side transport line (41) or the lower stage-side transport line (42), and operates a rejecting part (27A, 27B) provided in the specified transport line.

4. The device (50) for eliminating a defective sheet according to any one of claims 2 and 3, wherein the slitter device (24) cuts the continuous cardboard sheet (E2) into a plurality of the continuous cardboard sheets (E21, E22, E23) having a predetermined width, and
the control device (52) specifies the plate-shaped cardboard sheet (F1, F2) having the defective part (R), based on the position of the defective part (R) detected by the defect detection device (51) and a cutting position of the cardboard sheet (E21, E22, E23) cut by the slitter device (24), and rejects the specified plate-shaped cardboard sheet (F1, F2) from the transport line (41, 42) using the rejecting device (27).

5. A method for eliminating a defective sheet in plate-shaped cardboard sheets (F) each formed by bonding a first liner (A), a corrugated medium paper (B1, B2), and a second liner (C1, C2) together, the method comprising:
a step of detecting a position of a defective part (R) in the medium paper (B1, B2);
a step of cutting a continuous cardboard sheet (E) to a predetermined width along a transport direction;
a step of cutting off the continuous cardboard sheet (E1, E2) to a predetermined length along a width direction to form plate-shaped cardboard sheets (F1, F2); and
a step of transporting the plate-shaped cardboard sheets (F1, F2) along a plurality of transport lines (41, 42),
**characterized by** further comprising
a step of specifying, as a defective sheet, the plate-shaped cardboard sheet (F1, F2) having the defective part (R), based on a position of the defective part (R) and a cutting position of the continuous cardboard sheet (E1, E2) in the width direction, and rejecting the defective sheet from the transport line (41, 42) on which the defective sheet is transported.

6. An apparatus (10) for manufacturing a cardboard sheet, comprising:
a single facer (13, 17) that manufactures a single-faced cardboard sheet (D1, D2) by bonding a second liner (A) to a corrugated medium paper (B1, B2);
a double facer (22) that manufactures a double-faced cardboard sheet (E) by bonding a first liner (A) to the medium paper side of the single-faced cardboard sheet (D1, D2); and
the device (50) for eliminating a defective sheet according to any one of claims 1 to 4.

## Patentansprüche

1. Vorrichtung (50) zum Entfernen eines fehlerhaften Bogens bei plattenförmigen Kartonbogen (F), die jeweils durch Verkleben einer ersten Deckbahn (A), eines gewellten Mittelpapiers (B1, B2) und einer zweiten Deckbahn (C1, C2) gebildet werden, wobei die Vorrichtung (50) umfasst:
eine Fehlerdetektionsvorrichtung (51), die eine Position eines fehlerhaften Abschnitts (R) in dem Mittelpapier (B1, B2) detektiert;
eine Schneidvorrichtung (24), die eine fortlaufende Kartonbahn (E) entlang einer Transportrichtung auf eine vorbestimmte Breite schneidet;
eine Abschneidevorrichtung (26), die die fortlaufende Kartonbahn (E1, E2) entlang einer Breitenrichtung auf eine vorbestimmte Länge abschneidet, um plattenförmige Kartonbogen (F1, F2) zu bilden;
eine Vielzahl von Transportlinien (41, 42), die die plattenförmigen Kartonbogen (F1, F2) transportieren; und
eine Ausschussvorrichtung (27), die
eine Vielzahl von Ausschussvorrichtungsbauteilen (27A, 27B) beinhaltet, die entsprechend der Vielzahl von Transportlinien (41, 42) bereitgestellt werden, und
die plattenförmigen Kartonbogen (F1, F2), die auf der Vielzahl von Transportlinien (41, 42) transportiert werden, aus den Transportlinien (41, 42) verwirft,
**dadurch gekennzeichnet, dass** sie ferner umfasst
eine Steuervorrichtung (52), die als fehlerhaften Bogen den plattenförmigen Kartonbogen (F1, F2) festlegt, der den fehlerhaften Abschnitt (R) aufweist, basierend auf der Position des fehlerhaften Abschnitts (R), die durch die Fehlerdetektionsvorrichtung (51) detektiert wird, und eine Schneidposition der fortlaufenden Kartonbahn (E1, E2) in der Breitenrichtung festlegt, und den Ausschussvorrichtungsbauteil (27A, 27B), der in der Transportlinie (41, 42) bereitgestellt ist, auf der der fehlerhafte Bogen transportiert wird, bedient, um den fehlerhaften Bogen zu verwerfen.

2. Vorrichtung (50) zum Entfernen eines fehlerhaften Bogens nach Anspruch 1,
wobei die Schneidvorrichtung (24) eine Kreismesservorrichtung ist, die die fortlaufende Kartonbahn (E) entlang der Transportrichtung auf eine vorbestimmte Breite schneidet,
die Abschneidevorrichtung (26) eine Schneidevorrichtung ist, die eine Vielzahl von fortlaufenden Kartonbahnen (E1, E2), die auf die vorbestimmte Breite geschnitten ist, entlang der Breitenrichtung auf eine vorbestimmte Länge abschneidet, und
eine Gebervorrichtung (25), die die Vielzahl von fortlaufenden Kartonbahnen (E1, E2) jeweils auf die Vielzahl von Transportlinien (41, 42) verteilt, zwischen der Kreismesservorrichtung (24) und der Schneidvorrichtung (26) bereitgestellt ist.

3. Vorrichtung (50) zum Entfernen eines fehlerhaften Bogens nach Anspruch 2,
wobei die Gebervorrichtung (25) eine fortlaufende Kartonbahn (E1), die auf eine vorbestimmte Breite geschnitten ist, auf eine obere Transportlinienteilstrecke (41) verteilt, und die andere fortlaufende Kartonbahn (E2) auf eine untere Transportlinienteilstrecke (42) verteilt, und
die Steuervorrichtung (52) festlegt, ob ein Transportzielort des plattenförmigen Kartonbogens, das den fehlerhaften Abschnitt (R) aufweist, die obere Transportlinienteilstrecke (41) oder die untere Transportlinienteilstrecke (42) ist, und
das Ausschussvorrichtungsbauteil (27A, 27B) bedient, das in der festgelegten Transportlinie bereitgestellt ist.

4. Vorrichtung (50) zum Entfernen eines fehlerhaften Bogens nach einem der Ansprüche 2 und 3,
wobei die Kreismesservorrichtung (24) die fortlaufende Kartonbahn (E2) in eine Vielzahl von fortlaufenden Kartonbahnen (E21, E22, E23) schneidet, die eine vorbestimmte Breite aufweisen, und
die Steuervorrichtung (52) den plattenförmigen Kartonbogen (F1, F2), der den fehlerhaften Abschnitt (R) aufweist, basierend auf der Position des fehlerhaften Abschnitts (R), die durch die Fehlerdetektionsvorrichtung (51) detektiert wird, und einer Schneidposition der Kartonbahn (E21, E22, E23), die durch die Kreismesservorrichtung (24) geschnitten wird, festlegt, und den festgelegten plattenförmigen Kartonbogen (F1, F2) unter Verwendung der Ausschussvorrichtung (27) aus der Transportlinie (41, 42) verwirft.

5. Verfahren zum Entfernen eines fehlerhaften Bogens bei plattenförmigen Kartonbogen (F), die jeweils durch Verkleben einer ersten Deckbahn (A), eines gewellten Mittelpapiers (B1, B2) und einer zweiten Deckbahn (C1, C2) gebildet werden, wobei das Verfahren umfasst:
einen Schritt des Detektierens einer Position eines fehlerhaften Abschnitts (R) in dem Mittelpapier (B1, B2);
einen Schritt des Schneidens einer fortlaufenden Kartonbahn (E) entlang einer Transportrichtung auf eine vorbestimmte Breite;
einen Schritt des Abschneidens der fortlaufenden Kartonbahn (E1, E2) entlang einer Breitenrichtung auf eine vorbestimmte Länge, um plattenförmige Kartonbogen (F1, F2) zu bilden;
einen Schritt des Transportierens der plattenförmigen Kartonbogen (F1, F2) entlang einer Vielzahl von Transportlinien (41, 42),
**dadurch gekennzeichnet, dass** das Verfahren ferner umfasst
einen Schritt des Festlegens als fehlerhaften Bogen den plattenförmigen Kartonbogen (F1, F2), der den fehlerhaften Abschnitt (R) aufweist, basierend auf der Position des fehlerhaften Abschnitts (R), und einer Schneidposition der fortlaufenden Kartonbahn (E1, E2) in der Breitenrichtung, und des Verwerfens des fehlerhaften Bogens aus der Transportlinie (41, 42), auf der der fehlerhafte Bogen transportiert wird.

6. Vorrichtung (10) zur Herstellung eines Kartonbogens, umfassend:
eine einseitige Wellpappenmaschine (13, 17), die eine einseitige Kartonbahn (D1, D2) durch Verkleben einer zweiten Deckbahn (A) mit einem gewellten Mittelpapier (B1, B2) herstellt;
eine zweiseitige Wellpappenmaschine (22), die durch Verkleben einer ersten Deckbahn (A) mit der Mittelpapierseite der einseitigen Kartonbahn (D1, D2) eine zweiseitige Kartonbahn (E) herstellt; und
die Vorrichtung (50) zum Entfernen eines fehlerhaften Bogens nach einem der Ansprüche 1 bis 4.

## Revendications

1. Dispositif (50) pour éliminer une feuille défectueuse dans des feuilles cartonnées en forme de plaque (F) chacune formée par collage d'un premier revêtement (A), d'un papier central ondulé (B1, B2) et d'un second revêtement (C1, C2) ensemble, le dispositif (50) comprenant :
un dispositif de détection de défauts (51) qui détecte une position d'une partie défectueuse (R) dans le papier central (B1, B2) ;
un dispositif de coupe (24) qui coupe une feuille cartonnée continue (E) à une largeur prédéterminée le long d'une direction de transport ;
une coupeuse (26) qui découpe la feuille cartonnée continue (E1, E2) à une longueur prédéterminée le long d'une direction de largeur pour former des feuilles cartonnées en forme de plaque (F1, F2) ;
une pluralité de lignes de transport (41, 42) qui transportent les feuilles cartonnées en forme de plaque (F1, F2) ; et
un dispositif de rejet (27) qui
inclut une pluralité de parties de rejet (27A, 27B) prévues en correspondance avec la pluralité de lignes de transport (41, 42), et
rejette les feuilles cartonnées en forme de plaque (F1, F2) qui sont transportées sur la pluralité de lignes de transport (41, 42) à partir des lignes de transport (41, 42),
**caractérisé en ce qu'**il comprend en outre
un dispositif de commande (52) qui spécifie, comme feuille défectueuse, la feuille cartonnée en forme de plaque (F1, F2) présentant la partie défectueuse (R) sur la base d'une position de la partie défectueuse (R) détectée par le dispositif de détection de défauts (51) et une position de coupe de la feuille cartonnée continue (E1, E2) dans la direction de largeur, et actionne la partie de rejet (27A, 27B) prévue dans la ligne de transport (41, 42) sur laquelle la feuille défectueuse est transportée, de façon à rejeter la feuille défectueuse.

2. Dispositif (50) pour éliminer une feuille défectueuse selon la revendication 1,
dans lequel le dispositif de coupe (24) est une découpeuse qui coupe la feuille cartonnée continue (E) à une largeur prédéterminée le long de la direction de transport,
la coupeuse (26) est une coupeuse qui découpe une pluralité de feuilles cartonnées continues (E1, E2) coupées à la largeur prédéterminée à une longueur prédéterminée le long de la direction de largeur, et
un dispositif conducteur (25) qui distribue la pluralité de feuilles cartonnées continues (E1, E2) sur la pluralité de lignes de transport (41, 42), respectivement, est prévu entre le dispositif de coupe (24) et la coupeuse (26).

3. Dispositif (50) pour éliminer une feuille défectueuse selon la revendication 2,
dans lequel le dispositif conducteur (25) distribue une feuille cartonnée continue (E1) coupée à une largeur prédéterminée vers une ligne de transport côté étage supérieur (41) et distribue l'autre feuille cartonnée continue (E2) vers une ligne de transport côté étage inférieur (42), et
le dispositif de commande (52) spécifie si une destination de transport de la feuille cartonnée en forme de plaque présentant la partie défectueuse (R) est la ligne de transport côté étage supérieur (41) ou la ligne de transport côté étage inférieur (42), et actionne une partie de rejet (27A, 27B) prévue dans la ligne de transport spécifiée.

4. Dispositif (50) pour éliminer une feuille défectueuse selon l'une quelconque des revendications 2 et 3,
dans lequel le dispositif de coupe (24) coupe la feuille cartonnée continue (E2) en une pluralité de feuilles cartonnées continues (E21, E22, E23) présentant une largeur prédéterminée, et
le dispositif de commande (52) spécifie la feuille cartonnée en forme de plaque (F1, F2) présentant la partie défectueuse (R), sur la base de la position de la partie défectueuse (R) détectée par le dispositif de détection de défauts (51) et une position de coupe de la feuille cartonnée (E21, E22, E23) coupée par le dispositif de coupe (24), et rejette la feuille cartonnée en forme de plaque spécifiée (F1, F2) depuis la ligne de transport (41, 42) en utilisant le dispositif de rejet (27).

5. Procédé d'élimination d'une feuille défectueuse dans des feuilles cartonnées en forme de plaque (F) formée chacune par collage d'un premier revêtement (A), d'un papier central ondulé (B1, B2) et d'un second revêtement (C1, C2) ensemble, le procédé comprenant :
une étape de détection d'une position d'une partie défectueuse (R) dans le papier central (B1, B2) ;
une étape de coupe d'une feuille cartonnée continue (E) à une largeur prédéterminée le long d'une direction de transport ;
une étape de découpe de la feuille cartonnée continue (E1, E2) à une longueur prédéterminée le long d'une direction de largeur pour former des feuilles cartonnées en forme de plaque (F1, F2) ; et
une étape de transport des feuilles cartonnées en forme de plaque (F1, F2) le long d'une pluralité de lignes de transport (41, 42),
**caractérisé en ce qu'**il comprend en outre
une étape de spécification, comme feuille défectueuse, de la feuille cartonnée en forme de plaque (F1, F2) présentant la partie défectueuse (R), sur la base d'une position de la partie défectueuse (R) et d'une position de coupe de la feuille cartonnée continue (E1, E2) dans la direction de largeur, et de rejet de la feuille défectueuse depuis la ligne de transport (41, 42) sur laquelle la feuille défectueuse est transportée.

6. Appareil (10) de fabrication d'une feuille cartonnée, comprenant :
une onduleuse simple face (13, 17) qui fabrique une feuille cartonnée simple face (D1, D2) en collant un second revêtement (A) sur un papier central ondulé (B1, B2) ;
une onduleuse double face (22) qui fabrique une feuille cartonnée recto-verso (E) en collant un premier revêtement (A) sur le côté papier central de la feuille cartonnée simple face (D1, D2) ; et
le dispositif (50) pour éliminer une feuille défectueuse selon l'une quelconque des revendications 1 à 4.
